# EUROPEAN PATENT APPLICATION

(11) **EP 2 665 173 A1**
(43) Date of publication of application: **20.11.2013**
(21) Application number: 12733970.3
(22) Date of filing: 06.01.2012
(51) Int. Cl.: H02M 7/483, H02M 7/49, H02M 7/497

(54) **SEMICONDUCTOR POWER CONVERSION DEVICE**

(30) Priority: 12.01.2011 JP 2011003662
(71) Applicant: Kabushiki Kaisha Toshiba, Minato-ku Tokyo 105-8001 (JP)
(72) Inventor: HASEGAWA, Ryuta, Minato-ku, Tokyo (JP); NAKAZAWA, Yosuke, Minato-ku, Tokyo (JP); IIO, Naotaka, Minato-ku, Tokyo (JP)
(74) Representative: Willquist, Sofia Ellinor
(86) International application number: PCT/JP2012/000063
(87) International publication number: WO 2012/096151

(57) **Abstract**

The semiconductor power conversion device comprises n (where n is a natural number) mutually isolated inverse conversion devices INV_{U1} to INV_{Un} that output three-level voltage; and an inverse conversion device INV_{US}, isolated from said inverse conversion devices INV_{U1} to INV_{UN}, that employs as input DC voltage a voltage V_{DCS} of one half or one third of the input DC voltage V_{DC} of said inverse conversion devices INV_{U1} to INV_{Un} and that outputs three-level voltage; and in that said inverse conversion devices INV_{U1} to INV_{Un} and said inverse conversion device INVᵤ are series-cascade connected, and output a maximum V_{DC}×n+V_{DCS}.

## Description

### FIELD

An embodiment of the present invention relates to a semiconductor power conversion device wherein a plurality of inverse conversion devices that convert DC power to AC power are connected in series.

### BACKGROUND

A semiconductor power conversion device that outputs high power must convert high voltages, so voltage withstanding ability (or withstanding voltage) must be guaranteed. Conventionally, in order to guarantee voltage withstanding ability, the method of connecting multiple converter and transformer stages in series was employed. By multistage serial connection of converters and transformers, a stepped voltage waveform close to a sine wave can be generated and the beneficial effect of reduction of harmonics is obtained.

In the construction of a conventional three-phase multistage inverter device (or three-phase multilevel inverter decie), typically three-phase half-bridge circuits are connected in series. An example is to be found at p. 153 and pp. 161 to 171 of "Power Electronic Circuits" First Edition, published by Ohm-sha on November 30, 2000 (hereinafter referred to as Non-patent Reference 1). Or by preparing three circuits in which single-phase full-bridge inverters are connected in series, a device having three phases for respective connection to the inputs of a three-phase load is obtained. An example is to be found in "Introduction to Power Electronics" Fourth Edition, published by Ohm-sha on September 10, 2006, p. 183 (hereinafter referred to as Non-patent Reference 2).

### PRIOR ART REFERENCES

### [NON-PATENT REFERENCES]

[Non-patent reference 1] "Power Electronic Circuits" First Edition, published by Ohm-sha on November 30, 2000, p. 153 and pp. 161 to 171
[Non-patent reference 2] "Introduction to Power Electronics" Fourth Edition, published by Ohm-sha on 10 September 10, 2006, p. 183

When a conventional multistage series circuit is employed to drive an AC load, harmonics are generated, since the output voltage is not a perfect sine wave. Harmonics can be reduced by using a PWM (pulse width modulation) waveform for the output voltage and raising the switching frequency, but the switching losses of switching elements of high withstand voltage are large, so there is an upper limit to the switching frequency. A large filter must therefore be installed at the output stage, making the device bulky.

An embodiment of the present invention provides a semiconductor power conversion device of small size capable of outputting voltage with little harmonics and reduced loss, irrespective of operating frequency.

According to an embodiment of the present invention, there are provided inverse conversion devices INV_{U1} to INV_{Un} that output n (where n is a natural number) mutually isolated three-level voltages, and an inverse conversion device INV_{US} that uses, as its input DC voltage, a voltage V_{DCS} of one half or one third of the input DC voltage V_{DC} of the inverse conversion devices INV_{U1} to INV_{Un} and outputs three-level voltage isolated from said inverse conversion devices INV_{U1} to INV_{Un}. Thus, by a series-cascade connection of the inverse conversion devices INVU1 to INVUn and the inverse conversion device INVᵤ, a maximum voltage of V_{DC}×n+V_{DCS} can be output.

### BRIEF DESCRIPTION OF THE DRAWINGS

Fig. 1 is a layout diagram in which a semiconductor power conversion device according to an embodiment of the present invention is applied as an inverter driving a three-phase AC load;
Fig. 2 is a circuit layout diagram showing an example of respective inverters INV constituting single-phase semiconductor power conversion devices according to an embodiment of the present invention;
Fig. 3 is an output voltage waveform diagram of inverters INV_{U1}, INV_{U2}, INV_{US} at each stage of a U-phase semiconductor power conversion device in response to a U-phase voltage instruction value V_{UD}* according to practical example 1 of the present invention;
Fig. 4 is a timing chart of the switching elements of the inverter INV_{US} of a U-phase semiconductor power conversion device according to practical example 1 of the present invention;
Fig. 5 is a waveform diagram of the output voltage of the inverters INV_{U1}, INV_{U2}, INV_{US} and the charging/discharging charge amount of INV_{US} at each stage of the U-phase semiconductor power conversion device in practical example 1 of the present invention in response to a U-phase voltage instruction value V_{UD}*.
Fig. 6 is a circuit layout diagram showing an example of respective inverters INV constituting a single-phase semiconductor power conversion device according to practical example 2 of the present invention;
Fig. 7 is a flowchart showing a method of selecting a switching pattern of an inverter INV that controls the neutral point potential fluctuation when the output voltage is -VDC/2 or +VDC/2 in practical example 2 of the present invention;
Fig. 8 is an output voltage waveform diagram of inverters INV_{U1}, INV_{U2}, INV_{US}* at each stage of a U-phase semiconductor power conversion device according to practical example 2 of the present invention in response to a U-phase voltage instruction value V_{UD}*;
Fig. 9 is a timing chart of the switching elements when the triangular wave car_{UA1} is 1 at its maximum value and 0.5 at its minimum value in practical example 2 of the present invention;
Fig. 10 is a timing chart of the switching elements when the triangular wave car_{UA2} is 0.5 at its maximum value and 0 at its minimum value in practical example 2 of the present invention;
Fig. 11 is a timing chart of the switching elements when the triangular wave car_{UB1} is 0.0 at its maximum value and -0.5 at its minimum value in practical example 2 of the present invention; and
Fig. 12 is a timing chart of the switching elements when the triangular wave car_{UB2} is -0.5 at its maximum value and -1.0 at its minimum value in practical example 2 of the present invention.

### DETAILED DESCRIPTION

### (Practical example 1)

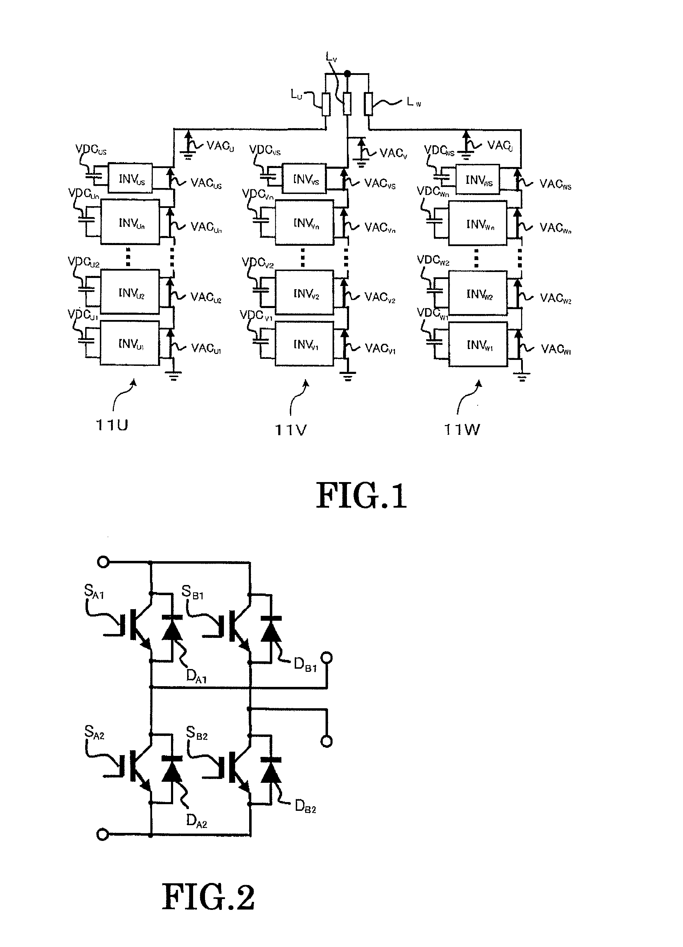

Fig. 1 is a diagram of a layout in which a semiconductor power conversion device according to an embodiment of the present invention is applied as an inverter driving a three-phase AC load. Single-phase semiconductor power AC devices 11U, 11V and 11W are respectively provided, corresponding to three-phase AC: U, V, W.

The U-phase semiconductor power conversion device 11U comprises a single low-voltage inverter INV_{US} and n high-voltage inverters INV_{U1} to INV_{UN}. The inverter INV_{US} inputs DC voltage VDC_{US} and INV_{U1} to INV_{UN} input DC voltages VDC_{U1} to VDC_{UN}. The DC voltages VDC_{U1} to VDC_{UN} are all taken as the same voltage, while the DC voltage VDC_{US} is taken as 1/2 or 1/3 of the DC voltages VDC_{U1} to VDC_{UN}. The outputs of the inverters INV_{U1} to INV_{UN} and INV_{US} are cascade-connected.

Although in Fig. 1 a cascade connection was illustrated in which the inverter INV_{U1} constituted the most-downstream stage, while the inverter INV_{US} constituted the most upstream-stage, the order of connection is not particularly restricted to this, and can be freely varied in accordance with ease of construction. With this construction, the DC voltages VDC_{US}, VDC_{U1} to VDC_{UN} are converted to respective AC voltages VAC_{US}, VAC_{U1} to VAC_{Un} and the U-phase semiconductor power conversion device 11U outputs AC voltage VAC_{U} to which these voltages have respectively been added.

Also, of the DC voltages VDC_{US}, VDC_{U1} to VDC_{UN}, when active power is supplied, at least one of the DC voltages VDC_{U1} to VDC_{UN} may be a DC voltage source that can supply active power, while the other DC voltage sources may be capacitors. When the device is employed as a voltage regulating device for system linkage, it may be arranged to supply exclusively reactive power, all of the DC voltage sources in this case being constituted by capacitors. In this case, the DC voltage VDC_{US} may have a value slightly more than 1/2 or 1/3 of the DC voltages VDC_{U1} to VDC_{UN}.

Like the U-phase, the V-phase semiconductor power conversion device 11V and the W-phase semiconductor power conversion device 11W are cascade-connected, respectively with high-voltage inverters INV_{V1} to INV_{UN} and low voltage inverter INV_{VS} and with high-voltage inverters INV_{W1} to INV_{WN} and low voltage inverter INV_{WS}. By means of this construction, in the V phase, the DC voltages VDC_{VS} and VDC_{V1} to VDC_{VN} are respectively converted to AC voltages VAC_{VS}, VAC_{V1} to VAC_{Vn} and the V-phase semiconductor power conversion device 11V outputs AC voltages VAC_{V} to which these voltages have been respectively added: in the W phase, the DC voltages VDC_{WS}, VDC_{W1} to VDC_{WN} are converted respectively to AC voltages VAC_{WS}, VAC_{W1} to VAC_{Wn} and the W-phase semiconductor power conversion device 11W outputs an AC voltage VAC_{W} to which these respective voltages have been added. In this way, the three-phase AC loads L_{U}, L_{V}, L_{W} are respectively driven.

Fig. 2 is a circuit layout diagram showing an example of respective inverters INV constituting single-phase semiconductor power conversion devices 11U, 11V, 11W according to an embodiment of the present invention. The respective inverters INV comprise four switching elements S_{A1}, S_{A2}, S_{B1}, S_{B2} and flyback diodes D_{A1}, D_{A2}, D_{B1}, D_{B2}, that are respectively connected in antiparallel with all of the switching elements: a full-bridge inverter is thereby constituted, comprising two legs, namely, a leg in which the switching element S_{A1} and the switching element S_{A2} are cascade-connected, and a leg in which the switching element S_{B1} and the switching element S_{B2} are cascade-connected.

The leg comprising the switching elements S_{A1}, S_{A2} is connected with the upstream-stage inverter and the leg comprising the switching elements S_{B1}, S_{B2} is connected with the downstream-stage inverter. All of the inverters INV of Fig. 1 are constructed as shown in Fig. 2.

For the four switching elements constituting the high-voltage inverters INV_{U1} to INV_{UN}, INV_{V1} to INV_{VN}, INV_{W1} to INV_{WN}, semiconductor devices using silicon are employed: depending on the DC voltage and load current, IGBTs or MOS-FETs or the like may be employed. Semiconductor devices using silicon are also employed for the four flyback diodes.

For the four switching elements constituting the low-voltage inverters INV_{US}, INV_{VS}, INV_{WS}, semiconductor devices using silicon carbide or gallium nitride are employed: depending on the DC voltage and load current, IGBTs or MOS-FETs or the like may be employed. Semiconductor devices using silicon carbide or gallium nitride are also employed for the four flyback diodes.

Next, the operation of practical example 1 constructed in this way will be described. Hereinafter, the operation will be described taking as an example U-phase inverters INV_{U1}, INV_{U2}, INV_{US}, in the case where the number of converter stages is n = 2. Regarding the DC voltages, the DC voltage VDC is equal to the DC voltage VDC_{U1} of the inverter INV_{U1} and the DC voltage VDC_{U2} of the inverter INV_{U2}, while the DC voltage VDC_{US} of the inverter INV_{US} is 1/2 of VDC.

The inverters INV_{U1}, INV_{U2} constitute a full bridge as shown in Fig. 2 and so output voltage three levels. Specifically, they output voltage of -VDC, 0 and +VDC. Taking as an example the inverter INV_{U1}, the method of drive of the switching elements S_{U1A1}, S_{U1A2}, S_{U1B1}, S_{U1B2} constituting the inverter INV_{U1} will now be described. The switching elements S_{A1}, S_{A2}, S_{B1}, S_{B2} of Fig. 2 respectively correspond to the switching elements S_{U1A1}, S_{U1A2}, S_{U1B1}, S_{U1B2}.

The inverter INV_{U1} outputs voltage of the three levels: - VDC, 0, and +VDC, depending on whether the switching elements S_{U1A1}, S_{U1A2}, S_{U1B1}, S_{U1B2} are ON or OFF. Table 1 shows an example of the switching pattern of the inverter INV_{U1}.

**[Table 1]**

| Output voltage | S_{U1A1} | S_{U1A2} | S_{U1B1} | S_{U1B2} |
|---|---|---|---|---|
| 0 | ON | OFF | ON | OFF |
| +VDC | ON | OFF | OFF | ON |
| 0 | OFF | ON | OFF | ON |
| -VDC | OFF | ON | ON | OFF |
| 0 | ON | OFF | ON | OFF |

Table 1 shows the ON/OFF condition of the switching elements when the output voltage effects a transition 0→+VDC→0→-VDC→0. For example, if the switching element S_{U1A1} and the switching element S_{U1B2} are ON, while the switching element S_{U1A2} and switching element S_{U1B1} are OFF, a voltage of +VDC is output. Also, operation must always be performed in a complementary fashion in that the switching element S_{U1A2} is OFF when the switching element S_{U1A1} is ON, and the switching element S_{U1B2} is OFF when the switching element S_{U1B1} is ON. Also, simultaneous switching of four switching elements when the output voltage is changed cannot occur: always only the pair on either the upper or lower arm can be switched. The inverter unit operation described above is common to both the inverter units INV_{US}, INV_{U2}.

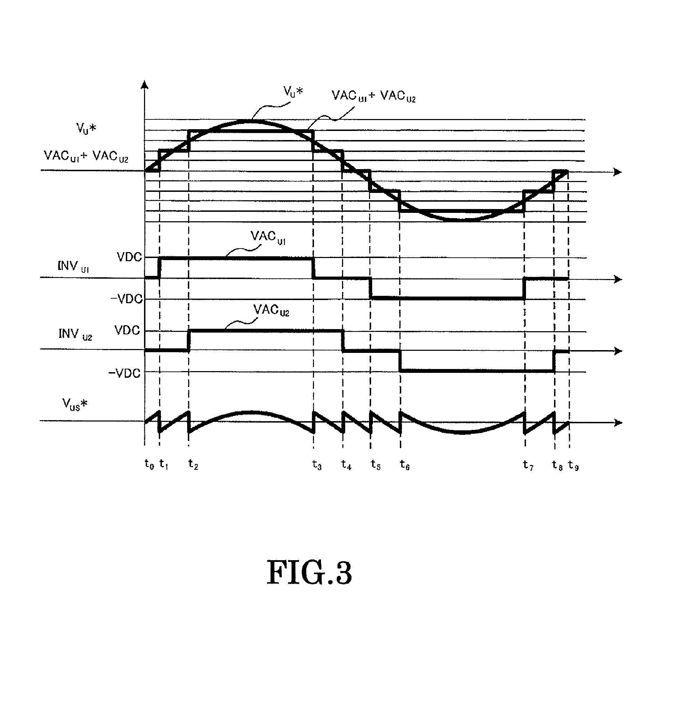

Next, the operation of the entire U-phase semiconductor power conversion device, including the inverter INV_{US}, will be described. First of all, the maximum value of the U-phase voltage instruction value V_{U}* is set as 2× the number of inverter stages i.e. 2+1 = 5, and the U-phase voltage instruction value V_{U}*, which is an analog value, is converted to a 5-level digital value V_{UD}*. Fig. 3 is an output voltage waveform diagram of the inverters INV_{U1}, INV_{U2}, INV_{US} in respect of each stage of the U-phase voltage instruction value V_{UD}* of the U-phase semiconductor power conversion device; Table 2 is a table showing the output voltage timing of the inverters INV_{U1}, INV_{U2}, INV_{US} in practical example 1.

**[Table 2]**

| U-phase digital voltage instruction value V_{UD}* | Time | Inverter INV_{U1} output voltage VAC_{U1} | Inverter INV_{U2} output voltage VAC_{U2} | Total output voltage VAC_{U1} + VAC_{U2} |
|---|---|---|---|---|
| **0≤ V_{UD}*<1** | **t₀-t₁** | 0 | 0 | 0 |
| **1≤ V_{UD}*<3** | **t₁-t₂** | **+VDC** | 0 | **+VDC** |
| **3≤ V_{UD}*** | **t₂-t₃** | **+VDC** | **+VDC** | **+2VDC** |
| **3≥ V_{UD}*>1** | **t₃-t₄** | 0 | **+VDC** | **+VDC** |
| 1≥ **V_{UD}*>-1** | **t₄-t₅** | 0 | 0 | 0 |
| **-1≥ V_{UD}*>-3** | **t₅-t₆** | **-VDC** | 0 | **-VDC** |
| **-3≥ V_{UD}*** | **t₆-t₇** | **-VDC** | **-VDC** | **-2VDC** |
| **-3≤ V_{UD}*<-1** | **t₇-t₈** | 0 | **-VDC** | **-VDC** |
| **-1≤ V_{UD}*<0** | **t₈-t₉** | 0 | 0 | 0 |

The inverters INV_{U1}, INV_{U2} output one pulse per cycle; the differences of the U-phase voltage instruction value V_{UD}* and the output voltages VAC_{U1}, VAC_{U2} of the inverters INV_{U1}, INV_{U2} are output as the voltage instruction value V_{US}* of the inverter INV_{US}. In this way, the total output voltage (VAC_{U1}+VAC_{U2}) of the inverters INV_{U1}, INV_{U2} is a stepped waveform. Also, since the output voltage VAC_{US} of the inverter INV_{US} is controlled so as to be the voltage instruction value V_{US}* by output of a PWM waveform by the inverter INV_{US}, the U-phase semiconductor power conversion device can deliver an output voltage that is in even closer agreement with the U-phase voltage instruction value V_{U}*.

Next, the PWM control method of the inverter INV_{US} will be described. Just as in the case of Fig. 2, the inverter INV_{US} is constituted by switching elements: S_{USA1}, S_{USA2}, S_{USB1}, and S_{USB2}.

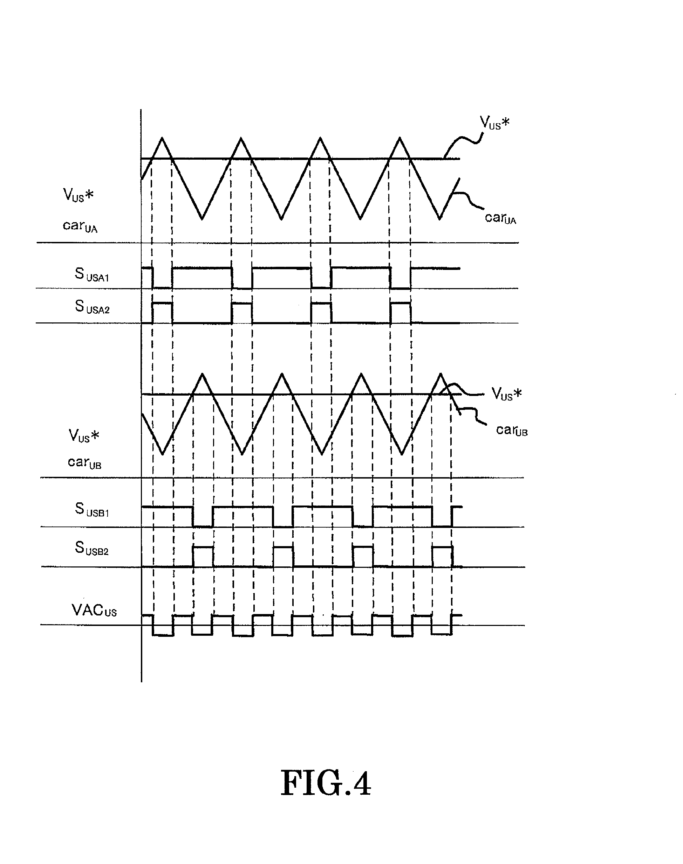

Fig. 4 is a timing chart of the switching elements of the inverter INV_{US} of a U-phase semiconductor power conversion device according to practical example 1 of the present invention. In Fig. 4, the operating condition of the various switching elements is indicated by an ON condition when the signal waveform is High and an OFF condition, when the signal waveform is Low. The voltage instruction value V_{US}* of the inverter INV_{US} is the difference of the U-phase voltage instruction value V_{U}* and the output voltage of the inverters INV_{U1}, INV_{U2}, and is calculated as a continuous value. The voltage instruction value V_{US}* of the inverter INV_{US} is a waveform as shown in Fig. 3, but, in Fig. 4, for simplicity of description, is shown as a straight line.

The triangular wave car_{UA} generated with a given carrier frequency and the voltage instruction value V_{US}* are compared and, if the voltage instruction value V_{US}* of the inverter INV_{US} is larger than the triangular wave car_{UA}, the switching element S_{USA1} is ON, while the switching element S_{USA2} is OFF. If the voltage instruction value V_{US}* is smaller than the triangular wave car_{UA}, the switching element S_{USA1} is OFF, while the switching element S_{USA2} is ON.

Also, the triangular wave car_{UA} and the triangular wave car_{UB} shifted in phase by 180° and the voltage instruction value V_{US}* are compared, and if the voltage instruction value V_{US}* is larger than the triangular wave car_{UB}, the switching element S_{U1B1} is ON, while the switching element S_{U1B2} is OFF. If the voltage instruction value V_{US}* is smaller than the triangular wave car_{UB}, the switching element S_{U1B1} is OFF and the switching element S_{U1B2} is ON. By offsetting the phase of the triangular wave car by 180°in each leg, the output voltage waveform of the inverter INV_{US} becomes as indicated by VAC_{US} in Fig. 4, making it possible to output a voltage waveform containing a double harmonic of the carrier frequency.

The result of voltage being output by PWM control of the inverter INV_{US} is that the output voltage waveform obtained by summing the outputs of the inverters INV_{U1}, INV_{U2}, INV_{US} approximates to a sine wave. Whereas, with the number of inverter stages being two, the number of positive levels solely from the inverter INV_{U1}, INV_{U2} would be 2, since INV_{US} outputs the voltage between the various levels and the maximum voltage, 2×2+1 = 5 positive voltage levels become available; further, by adding negative voltage and 0 voltage, 5×2+1 = 11 voltage levels can be output. In fact, in the case where the number of inverter stages is n, {(n×2+1)×2+1}=4n+3 voltage levels become available.

If some or all of the DC voltage sources of the DC voltages VDC_{US}, VDC_{U1} to VDC_{UN} are constituted by capacitors, the capacitor voltages must be balanced. Hereinafter a method of balancing the capacitor voltages when the DC voltage sources of the DC voltages VDC_{U1}, VDC_{U2} are voltage sources that supply active power and the DC voltage source of the DC voltage VDC_{US} is a capacitor will be described.

First of all, in the method of Fig. 3, the case of voltage output will be described. Charging/discharging of the capacitor charge is determined by the direction of the output voltage and the output current. If the polarity of the result of multiplying the output voltage and the output current is positive, the capacitor charge is discharged, so the capacitor voltage drops. If the polarity of the result of multiplying the output voltage and the output current is negative, the capacitor charge is charged, so that the capacitor voltage rises.

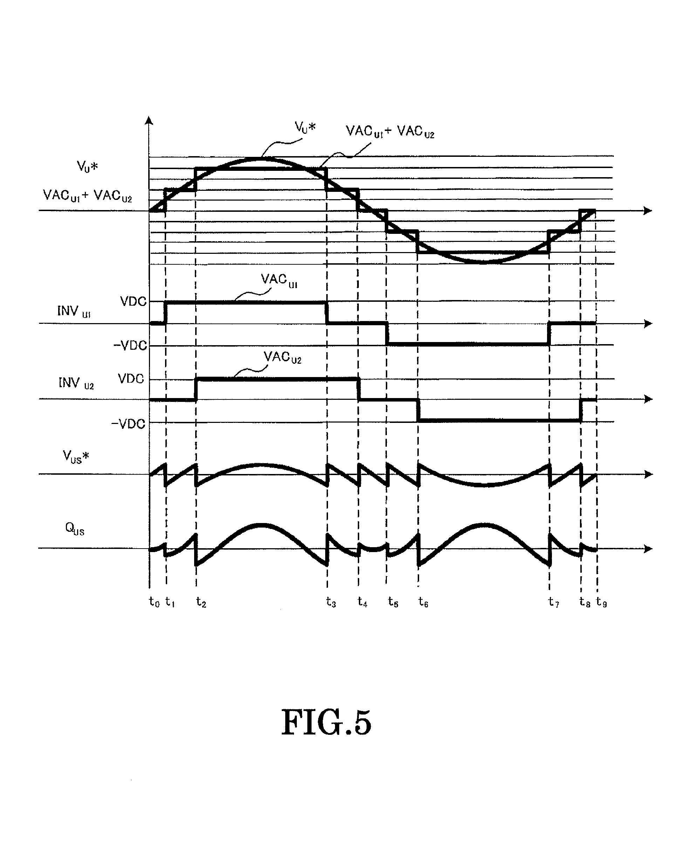

If the power factor of the load is 1, the phase of the current and voltage is the same, so the charging/discharging charge is represented by the Q_{US} waveform in Fig. 5. In the Q_{US} waveform, positive area larger than zero is a discharging charge amount, while negative area smaller than zero is a charging charge amount. In order to balance the voltages, the charging charge amount and the discharging charge amount must coincide, but, in the method of Fig. 3, in the case of voltage output, the discharging charge amount exceeds the charging charge amount, so the DC voltage VDC_{US} drops.

In this case, by delaying the time t₃ at which the voltage of the inverter INV_{U1} becomes zero, and bringing forward the time t₂ at which the voltage of the inverter INV_{U2} is output, the charging charge amount of the DC voltage VDC_{US} to the capacitor is increased, so that the discharging charge amount and the charging charge amount can be made to coincide.

It should be noted that, since the timing of the voltage output of the inverters INV_{U1}, INV_{U2} is varied, there is a period in which the difference of the voltage instruction value V_{U}* and the total output voltage (VAC_{U1}+VAC_{U2}) of the inverters INV_{U1}, INV_{U2} is larger than 1/2 of the DC voltages VDC_{U1}, VDC_{U2}. Consequently, the DC voltage of the DC voltage VDC_{US} must be a value that is slightly larger than 1/2 of the DC voltages VDC_{U1}, VDC_{U2}.

By the above action, the DC voltage VDC_{US} can be kept constant.

Hereinabove, the method of operation was described taking as an example the U-phase inverter INV_{US}; however, the V-phase and W-phase inverters INV_{VS} and INV_{WS} can output voltage in the same way as the U-phase inverter, in accordance with the respective voltage instruction values V_{V}*, V_{W}*.

In this way, by the action of the inverters INV_{US}, INV_{U1}, INV_{U2} of a single-phase semiconductor power conversion device 11, the number of levels of output voltage can be increased and a stepped waveform with little harmonics can be obtained. Whereas in the case where there are three full inverter stages having the same large DC voltage, the number of output voltage levels is the number of inverter stages 3×2+1 = 7 levels, with the three-stage construction of the inverters INV_{U1}, INV_{U2}, INV_{US} of practical example 1 of the present invention, 11-level output can be obtained, making it possible to reduce harmonics.

Furthermore, since the high-voltage inverters INV_{U1} to INV_{UN} output a single voltage pulse in each cycle, the number of times of switching can be minimized, making it possible to suppress switching losses. The inverter INV_{US} is of low DC voltage, namely 1/2 of the voltages of the inverters VDC_{U1} to VDC_{UN}, and so can be constituted by switching elements of low element withstand voltage. Even if high-frequency switching is performed using for example PWM control, the loss from the viewpoint of the inverter as a whole is small. Thus, a semiconductor power conversion device of little harmonics and of little loss can be obtained by combination of a plurality of high-voltage inverters VDC_{U1} to VDC_{UN} and a single low-voltage inverter INV_{US}.

In addition, a further reduction in power loss can be achieved by constructing the switching elements of the inverter INV_{US} using semiconductor devices employing silicon carbide or gallium nitride, which have little switching loss. In other words, harmonics can be further decreased by increasing the switching frequency. Although silicon carbide or gallium nitride elements are expensive, the number employed is restricted solely to the elements of the inverter INV_{US}, and so is small relative to the overall number of semiconductor elements: increase in overall costs can thus be suppressed.

Also, it can be arranged that a single phase of 3-phase AC power is respectively output by semiconductor power conversion devices U, V, W, by applying such single-phase semiconductor power conversion devices respectively to the three UVW phases. In this way, a three-phase semiconductor power conversion device is obtained.

### (Practical example 2)

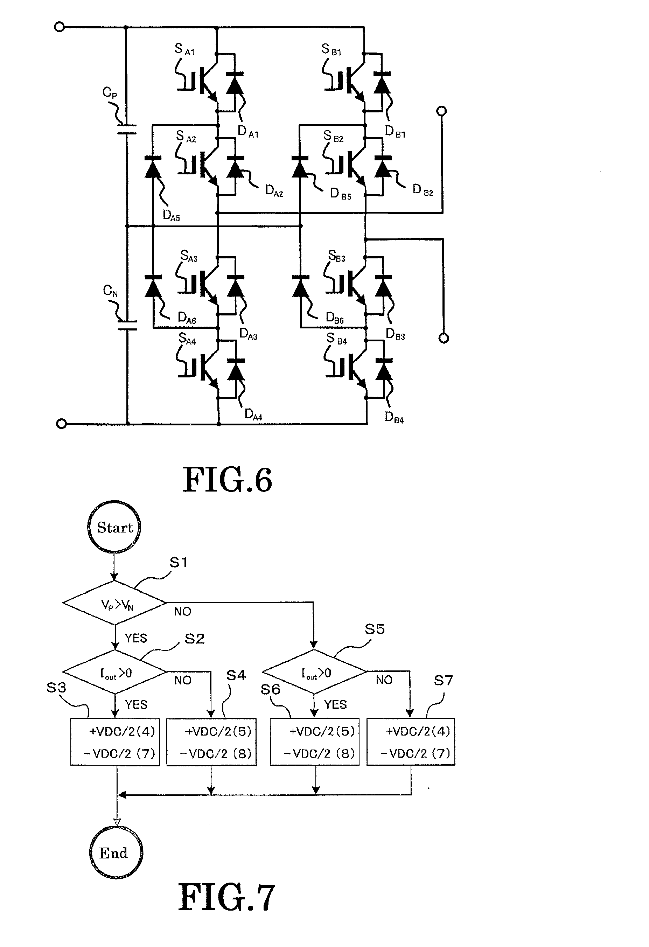

Next, practical example 2 of a semiconductor power conversion device according to an embodiment of the present invention will be described. Fig. 6 is a circuit layout diagram showing an example of respective inverters INV constituting a single-phase semiconductor power conversion device according to practical example 2 of an embodiment of the present invention. This practical example 2 is a practical example in which, with respect to the practical example 1 shown in Fig. 2, in addition to the switching elements S_{A1}, S_{A2}, S_{B1}, S_{B2}, there are additionally provided switching elements S_{A3}, S_{A4}, S_{B3}, S_{B4}, and there are additionally provided capacitors C_{P}, C_{N} and clamping diodes D_{A5}, D_{A6}, D_{B5}, D_{B6}. Identical elements to those in practical example 1 are given the same reference symbols, to avoid duplicated description.

In Fig. 6, an inverter INV is constituted by two capacitors C_{P}, C_{N}, eight switching elements S_{A1}, S_{A2}, S_{A3}, S_{A4}, S_{B1}, S_{B2}, S_{B3}, S_{B4}, eight flyback diodes D_{A1}, D_{A2}, D_{A3}, D_{A4}, D_{B1}, D_{B2}, D_{B3}, D_{B4} that are respectively connected in anti-parallel with these switching elements S_{A1}, S_{A2}, S_{A3}, S_{A4}, S_{B1}, S_{B2}, S_{B3}, S_{B4}, and, in addition, four clamping diodes D_{A5}, D_{A6}, D_{B5}, D_{B6} that are connected with the neutral points created by the capacitors C_{P}, C_{N}. The switching elements S_{A1}, S_{A2}, S_{A3}, S_{A4} and the switching elements S_{B1}, S_{B2}, S_{B3}, S_{B4} are respectively cascade-connected. In this way, an NPC full-bridge inverter comprising two legs is constituted. All of the inverters INV of Fig. 1 have the inverter construction shown in Fig. 6.

At this point, the construction of the inverters that respectively drive the 3-phase AC loads L_{U}, L_{V}, and L_{W} in Fig. 1 will be described. It will be assumed that the inverter INV_{US} inputs DC voltage VDC_{US}, while the INV_{U1} to INV_{UN} input DC voltages VDC_{U1} to VDC_{UN}. The DC voltages VDC_{U1} to VDC_{UN} are all the same voltage; the DC voltage VDC_{US} is 1/4 of the DC voltages VDC_{U1} to VDC_{UN}, and the outputs of the inverters INV_{U1} to INV_{UN} and INV_{US} are cascade-connected. The V phase and W phase are constituted by cascade connection in the same way as the U phase, by respective inverters INV_{V1} to INV_{VN} and INV_{VS}, and INV_{M1} to INV_{WN} and INV_{WS}. By means of this construction, the DC voltages VDC_{US}, VDC_{U1} to VDC_{UN} are converted to voltages VAC_{US}, VAC_{U1} to VAC_{Un}, and the AC voltage VAC_{U} obtained by adding these respective voltages is output.

Next, the operation of the semiconductor power conversion device according to practical example 2 will be described. Hereinafter, the method of operation will be described taking as an example the U-phase inverters INV_{U1}, INV_{U2}, INV_{US}, in the case where the number of converter stages is n = 2. Regarding the DC voltages, the DC voltage VDC_{US} of the inverter INV_{US} is 1/4 of the DC voltages VDC_{U1} to VDC_{UN} of the inverters INV_{U1}, INV_{U2}.

Since the inverters INV_{U1}, INV_{U2} are of full-bridge construction, if the DC voltage is VDC, five-level voltage is output. Specifically, voltages: -VDC, -VDC/2, 0, +VDC/2, +VDC are output.

Next, taking the inverter INV_{U1} as an example, the method of driving its constituent switching elements S_{U1A1}, S_{U1A2}, S_{U1A3}. S_{U1A4}, S_{U1B1}, S_{U1B2}, S_{U1B3}, S_{U1B4} will be described. It should be noted that the switching element S_{A1} of Fig. 6 corresponds to S_{U1A1}, the switching element S_{A2} corresponds to S_{U1A2}, the switching element S_{A3} corresponds to S_{U1A3}, the switching element S_{A4} corresponds to S_{U1A4}, the switching element S_{B1} corresponds to S_{U1B1}, the switching element S_{B2} corresponds to S_{U1B2}, the switching element S_{B3} corresponds to S_{U1B3} and the switching element S_{B4} corresponds to S_{U1B4}, respectively.

The inverter INV_{U1} outputs five voltage levels, depending on whether the switching elements S_{U1A1}, S_{U1A2}, S_{U1A3}, S_{U1A4}, S_{U1B1}, S_{U1B2}, S_{U1B3}, S_{U1B4} are ON or OFF. Specifically, it outputs the voltages: -VDC, -VDC/2, 0, +VDC/2, +VDC. Table 3 is a table showing the output voltage timing of the inverters INV_{U1}, INV_{U2}, INV_{US} in practical example 2.

**[Table 3]**

| | Output voltage | S_{U1A1} | S_{U1A2} | S_{U1A3} | S_{U1A4} | S_{U1B1} | S_{U1B2} | S_{U1B3} | S_{U1B4} |
|---|---|---|---|---|---|---|---|---|---|
| (1) | 0 | OFF | ON | ON | OFF | OFF | ON | ON | OFF |
| (2) | 0 | ON | ON | OFF | OFF | ON | ON | OFF | OFF |
| (3) | 0 | OFF | OFF | ON | ON | OFF | OFF | ON | ON |
| (4) | +VDC/2 | ON | ON | OFF | OFF | OFF | ON | ON | OFF |
| (5) | +VDC/2 | OFF | ON | ON | OFF | OFF | OFF | ON | ON |
| (6) | +VDC | ON | ON | OFF | OFF | OFF | OFF | ON | ON |
| (7) | -VDC/2 | OFF | OFF | ON | ON | OFF | ON | ON | OFF |
| (8) | -VDC/2 | OFF | ON | ON | OFF | ON | ON | OFF | OFF |
| (9) | -VDC | OFF | OFF | ON | ON | ON | ON | OFF | OFF |

Table 3 shows the ON/OFF condition of the switching elements determined for each output voltage: the ON/OFF condition of the switching elements constitutes a nine-fold switching pattern. This must conform to a complementary pattern of operation in that: when the switching element S_{U1A1} is ON, the switching element S_{U1A3} is OFF; when the switching element S_{U1A9} is ON, the switching element S_{U1A2} is OFF, when the switching element S_{U1B1} is ON, the switching element S_{U1B3} is OFF; and when the switching element S_{U1B4} is ON, the switching element S_{U1B2} is OFF. There is redundancy in that the output pattern of the zero voltage is threefold and the output pattern of +VDC and -VDC is twofold in each case.

By utilizing this redundancy, a switching pattern is determined so as to suppress neutral point potential fluctuation of the NPC inverters. Fluctuation of the neutral point potential takes place when only one of the two legs is connected with the neutral point and when the output voltage is -VDC/2, +VDC/2. The direction of fluctuation of the neutral point potential is determined by the connected leg and the direction of the output current Iₒᵤₜ.

The switching pattern is uniquely determined by the fact that no current flows to the neutral point when the output voltage is -VDC or +VDC.

When the output voltage is 0 there are three possible switching patterns, namely, switching patterns (1) to (3); the switching pattern (1) is always selected so that the voltage can be shifted by turning ON/OFF a single set of switching elements. For example when it is desired to change the output voltage from 0 to +VDC/2, this can be achieved by shifting from the switching pattern (1) to the switching pattern (4) by means of only a single set of switching elements, namely, the switching element S_{U1A1} and the switching element S_{U1A3}; from the switching pattern (3) to the switching pattern (4), three sets of switching are necessary, namely, switching element S_{U1A1} and switching element S_{U1A3}, switching element S_{U1A2} and switching element S_{U1A4}, switching element S_{U1B2} and switching element S_{U1B4}. In this way, it is possible to shift from the switching pattern (1) to the switching patterns (4), (5), (7), (8) by turning ON/OFF a single set of switching elements: the number of times of switching can therefore be minimized.

Fig. 7 is a flowchart showing a method of selection of the switching pattern of the inverter INV so as to control neutral point potential fluctuation, when the output voltage in practical example 2 according to the embodiment of the present invention is -VDC/2 or +VDC/2.

In the following, the potential of the capacitor C_{P} is designated by V_{P}, the potential of the capacitor C_{N} is designated by V_{N}, and the direction in which the output current Iₒᵤₜ flows from the inverter to the load is designated as the positive direction. Let us consider for example the case where the potential V_{P} is larger than the potential V_{N} and the current direction is positive. In this case, neutral point potential fluctuation is suppressed by elevation of the potential V_{N} when the current flows in the direction such as to charge the capacitor C_{N}.

In (S1), a decision is made as to whether or not the potential V_{P} of the capacitor C_{P} is larger than the potential V_{N} of the capacitor C_{N}. If the potential V_{P} of the capacitor C_{P} is indeed larger than the potential V_{N} of the capacitor C_{N}, a decision is made (S2) as to whether or not the output current Iₒᵤₜ is in the direction from the inverter towards the load. If the output current Iₒᵤₜ is indeed in the direction from the inverter towards the load, if it is desired to output a voltage -VDC/2, the switching pattern (7) is selected; if it is desired to output voltage +VDC/2, the switching pattern (4) is selected (S3). In this way, neutral point potential fluctuation is suppressed by passage of current in the direction such as to elevate the potential V_{N}.

If, as a result of the decision made in step S2, it is found that the output current Iₒᵤₜ is not in the direction from the inverter towards the load, if it is desired to output a voltage -VDC/2, the switching pattern (8) is selected, whereas, if it is desired to output a voltage +VDC/2, the switching pattern (5) is selected (S4). In this way, neutral point potential fluctuation is suppressed by passage of current in the direction whereby the potential V_{N} is increased.

If, as a result of the decision made in step S1, it is found that the potential V_{P} of the capacitor C_{P} is not larger than the potential V_{N} of the capacitor C_{N}, a decision is made (S5) as to whether or not the output current Iₒᵤₜ is in the direction from the inverter towards the load. If the output current Iₒᵤₜ is indeed in the direction from the inverter towards the load, if it is desired to output a voltage -VDC/2, the switching pattern (8) is selected; if it is desired to output a voltage +VDC/2, the switching pattern (5) is selected (S6). In this way, neutral point potential fluctuation is suppressed by passage of current in the direction such that the potential V_{N} drops.

If, as a result of the decision made in step S5, it is found that the output current Iₒᵤₜ is not in the direction from the inverter towards the load, if it is desired to output a voltage -VDC/2, the switching pattern (7) is selected, whereas, if it is desired to output a voltage +VDC/2, the switching pattern (4) is selected (S7). In this way, neutral point potential fluctuation is suppressed by passage of current in the direction such that the potential V_{N} drops.

Thus the switching pattern is determined in accordance with the magnitude of the potential V_{P} and the potential V_{N} and the direction of the output current Iₒᵤₜ. The above operation of the inverter unit is the same in the case of both the inverter INV_{U1} and the inverter INV_{U2}.

Next, the operation of the U-phase inverter as a whole including the inverter unit INV_{S} will be described. It will be assumed that the maximum value of the U-phase voltage instruction value V_{U}* is 8 × number of inverter stages 2+2 = 18, the U-phase voltage instruction value V_{U}*, which is an analog value, being converted to an 18-level digital value V_{UD}*.

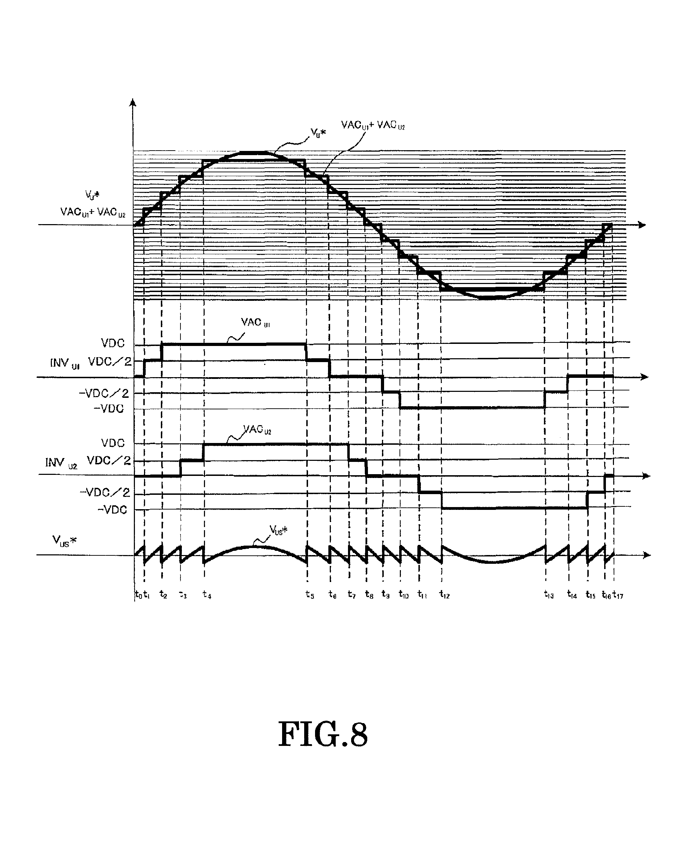

Fig. 8 is the output voltage waveform of the inverters INV_{U1}, INV_{U2} and INV_{US} in respect of each stage of the U-phase voltage instruction value V_{UD}* of the U-phase semiconductor power conversion device; Table 4 is a table showing the output voltage timings of the inverters INV_{U1}, INV_{U2} and INV_{US} in practical example 2.

**[Table 4]**

| U-phase digital voltage instruction value V_{UD}* | Time | Inverter INV_{U1} output voltage VAC _{U1} | Inverter INV_{U2} output voltage VAC _{U2} | Total output voltage VAC _{U1} + VAC _{U2} |
|---|---|---|---|---|
| 0≤V_{UD}*<2 | t₀-t₁ | 0 | 0 | 0 |
| 2≤V_{UD}*<6 | t₁-t₂ | +VDC/2 | 0 | +VDC/2 |
| 6≤V_{UD}*<10 | t₂-t₃ | +VDC | 0 | +VDC |
| 10<V_{UD}*<14 | t₃-t₄ | +VDC | +VDC/2 | +1.5VDC |
| 14 ≤V_{UD}* | t₄-t₅ | +VDC | +VDC | +2VDC |
| 14≥V_{UD}*>10 | t₅-t₆ | +VDC/2 | +VDC | +1.5VDC |
| 10≥V_{UD}*>6 | t₆-t₇ | 0 | +VDC | +2VDC |
| 6≥V_{UD}*>2 | t₇-t₈ | 0 | +VDC/2 | +VDC |
| 2≥V_{UD}*>-2 | t₈-t₉ | 0 | 0 | 0 |
| -2 ≥ V_{UD}*>-6 | t₉-t₁₀ | -VDC/2 | 0 | -VDC/2 |
| -6≥V_{UD}*>-10 | t₁₀-t₁₁ | -VDC | 0 | -VDC |
| -10≥V_{UD}*>-14 | t₁₁-t₁₂ | -VDC | -VDC/2 | -1.5VDC |
| -14≥V_{UD}* | t₁₂-t₁₃ | -VDC | -VDC | -2VDC |
| -14 ≤V_{UD}*<-10 | t₁₃-t₁₄ | -VDC/2 | -VDC | -1.5VDC |
| -10≤V_{UD}*<-6 | t₁₄-t₁₅ | 0 | -VDC | -VDC |
| -6 ≤V_{UD}*<-2 | t₁₅-t₁₆ | 0 | -VDC/2 | -VDC/2 |
| -2 ≤ V_{UD}*<0 | t₁₆-t₁₇ | 0 | 0 | 0 |

The inverters INV_{U1}, INV_{U2} output one pulse per cycle, and the difference of the U-phase voltage instruction value V_{UD}* and the output voltages VAC_{U1}, VAC_{U2} of the inverters INV_{U1}, INV_{U2} is output as the voltage instruction value V_{US}* of the inverter INV_{US}. In this way, the total output voltage (VAC_{U1}+VAC_{U2}) of the inverters INV_{U1}, INV_{U2} assumes a stepped waveform. Also, since the inverter INV_{US} outputs a PWM waveform, the U-phase semiconductor power conversion device can output a voltage that coincides even more precisely with the U-phase voltage instruction value V_{U}*.

Next, the PWM control method of the inverter INV_{US} will be described. As shown in Fig. 6, the switching elements constituting the inverter INV_{US} are: switching elements S_{USA1}, S_{USA2}, S_{USA3}, S_{USA4}, S_{USB1}, S_{USB2}, S_{USB3} and S_{USB4}. In Fig. 6, for ease of illustration, the suffix "US" is omitted. This therefore means that S_{A1}=S_{USA1}. This is described in section [0019] and section [0045].

The switching pattern of the switching elements S_{USA1}, S_{USA2}, S_{USA3}, S_{USA4}, S_{USB1}, S_{USB2}, S_{USB3} and S_{USB4} is determined by comparing the four triangular waves car_{UA1}, car_{UA2}, car_{US1}, car_{UB2} generated with a given carrier frequency with the voltage instruction value V_{US}*. If it is assumed that the maximum value of the voltage instruction value V_{US}* is 1.0 and its minimum value is -1.0, the switching pattern is divided into four regions, namely: when the triangular wave car_{UA1} has a maximum value of 1 and minimum value of 0.5; when the triangular wave car_{UA2} has a maximum value of 0.5 and minimum value of 0; when the triangular wave car_{UB1} has a maximum value of 0.0 and minimum value of -0.5; and when the triangular wave car_{UB2} has a maximum value of -0.5 and minimum value of -1.0.

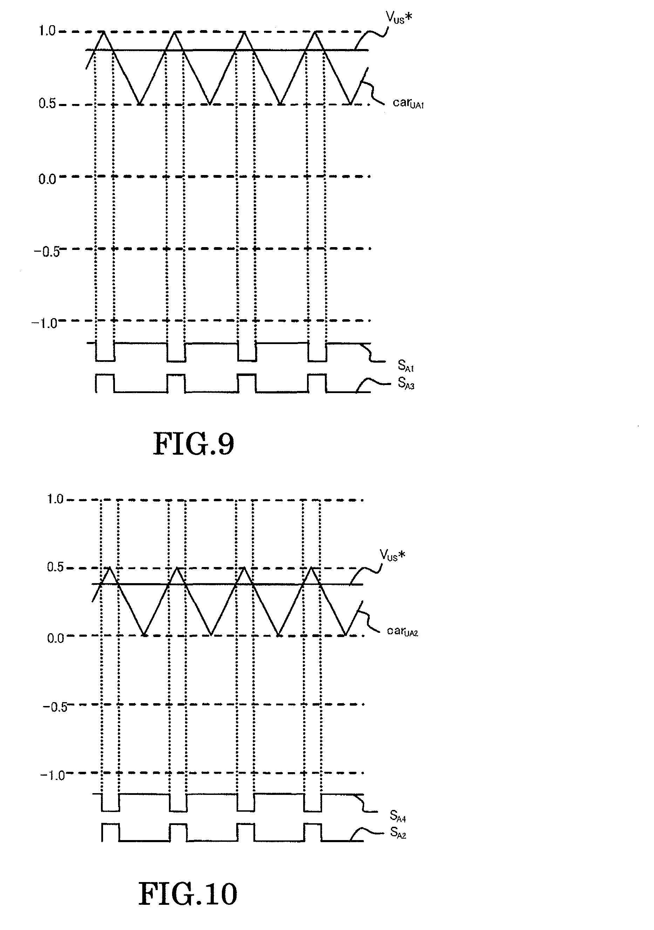

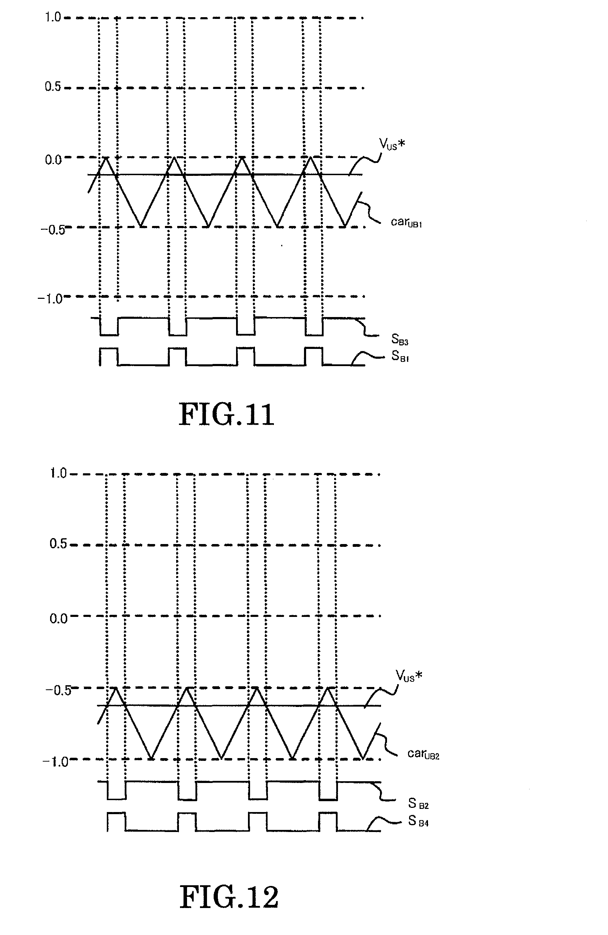

Fig. 9 to Fig.12 are timing charts of the switching elements of the inverter INV_{US} of the U-phase semiconductor power conversion device in practical example 2 of the present invention: Fig. 9 is a timing chart of the case where the triangular wave car_{UA1} has a maximum value of 1 and a minimum value of 0.5; Fig. 10 is a timing chart of the case where the triangular wave car_{UA2} has a maximum value of 0.5 and a minimum value of 0; Fig. 11 is a timing chart of the case where the triangular wave car_{UB1} has a maximum value of 0.0 and a minimum value of -0.5; and Fig. 12 is a timing chart of the case where the triangular wave car_{UB2} has a maximum value of -0.5 and a minimum value of -1.0.

In Fig. 9 to Fig. 12, as the operating condition of the various switching elements, the ON condition, when the signal waveform is High, and the OFF condition, when the signal waveform is Low, are shown. Also, the voltage instruction value V_{US}* of the inverter INV_{US} is the difference of the U-phase voltage instruction value V_{U}* and the output voltage of the inverters INV_{U1}, INV_{U2}, and is calculated as a continuous value. The voltage instruction value V_{US}* of the inverter INV_{US} has a waveform as shown in Fig. 8, but, in Fig. 9 to Fig. 12, for simplicity of description, is shown as a straight line.

Fig. 9 shows the operating condition of the switching elements S_{USA1}, S_{USA3} when the voltage instruction value V_{US}* is between 0.5 and 1.0: an ON condition is displayed when the signal waveform is High and an OFF condition is displayed when the signal waveform is Low. When the voltage instruction value V_{US}* of the inverter INV_{US} is larger than the triangular wave car_{UA1}, the switching element S_{USA1} is ON and the switching element S_{USA3} is OFF. When the voltage instruction value V_{US}* is smaller than the triangular wave car_{UA1}, the switching element S_{USA1} is OFF and the switching element S_{US_A3} is ON.

Fig. 10 shows the operating condition of the switching elements S_{USA4}, S_{USA2} when the voltage instruction value V_{US}* is between 0 and 0.5: an ON condition is displayed when the signal waveform is High and an OFF condition is displayed when the signal waveform is Low. When the voltage instruction value V_{US}* of the inverter INV_{US} is larger than the triangular wave car_{UA2}, the switching element S_{USA4} is ON and the switching element S_{USA2} is OFF. When the voltage instruction value V_{US}* is smaller than the triangular wave car_{UA2}, the switching element S_{USA4} is OFF and the switching element S_{USA2} is ON.

Fig. 11 shows the operating condition of the switching elements S_{USB3}, S_{USB1} when the voltage instruction value V_{US}* is between -0.5 and 0: an ON condition is displayed when the signal waveform is High and an OFF condition is displayed when the signal waveform is Low. When the voltage instruction value V_{US}* of the inverter INV_{US} is larger than the triangular wave car_{UB1}, the switching element S_{USB3} is ON and the switching element S_{USB1} is OFF. When the voltage instruction value V_{US}* is smaller than the triangular wave car_{UB1}, the switching element S_{USB3} is OFF and the switching element S_{USB1} is ON.

Fig. 12 shows the operating condition of the switching elements S_{USB2}, S_{USB4} when the voltage instruction value V_{US}* is between -1.0 and -0.5: an ON condition is displayed when the signal waveform is High and an OFF condition is displayed when the signal waveform is Low.

When the voltage instruction value V_{US}* of the inverter INV_{US} is larger than the triangular wave car_{UB2}, the switching element S_{USB2} is ON and the switching element S_{USB4} is OFF. When the voltage instruction value V_{US}* is smaller than the triangular wave car_{UB2}, the switching element S_{USB2} is OFF and the switching element S_{USB4} is ON.

In this way, by using the inverter INV_{US} for voltage output under PWM control, the output voltage waveform of the inverters INV_{U1}, INV_{U2}, INV_{US} becomes a waveform that is close to a sine wave.

In the case where the number of inverter stages is two, compared with the situation that only four positive levels are available using just the inverters INV_{U1}, INV_{U2}, by using the inverter INV_{US}, the voltages between all of the levels and also the maximum voltage can be output: the number of positive voltage levels available therefore becomes 4×4+2 = 18 levels; by adding the negative voltages and zero voltages, 18×2+1 = 37 voltage levels can be output. In fact, if the number of inverter stages is n, {(n×2×4+2)×2+1}=16n+5 voltage levels become available.

While, in the above description, a method of operation has been described taking as an example a U-phase semiconductor power conversion device, a V-phase, or W-phase semiconductor power conversion device could likewise output voltage close to a sine wave in the same way as the U-phase semiconductor power conversion device, in accordance with respective voltage instruction values V_{V}*, V_{W}*.

Thus, with practical example 2, the number of levels of output voltage is increased, so a stepped waveform with little harmonics can be obtained. Whereas, in the case of three full-bridge NPC inverter stages having DC voltages of the same magnitude, the number of output levels is the number of inverter stages i.e. 3×4+1 = 13 levels, with the three-stage construction comprising the inverters INV_{U1}, INV_{U2} and INV_{US} according to practical example 2, 37-level output can be achieved, making it possible to reduce harmonics.

Furthermore, in the case of the high-voltage inverters VDC_{U1} to VDC_{UN}, the output voltage is a single-pulse voltage per cycle, so the number of times of switching is reduced to the minimum: losses accompanying switching can thus be suppressed. Since the voltage of the inverter VDC_{US} is lower, namely, 1/4 of the voltage of the inverters VDC_{U1} to VDC_{UN}, a construction can be adopted using switching elements of low element withstand voltage. Even though high-frequency switching by for example PWM control is performed, from the standpoint of the inverter as a whole, losses are small.

Thus, by combining a plurality of high-voltage inverters and a single low-voltage inverter, an inverter with little harmonics and little loss can be obtained.

Also, such single-phase semiconductor power conversion devices can be respectively applied to three-phase UVW, each single phase of the three-phase AC power being arranged to be respectively output by these semiconductor power conversion devices U, V and W. In this way, a three-phase semiconductor power conversion device is obtained.

While various embodiments of the present invention have been described, these embodiments are presented merely by way of example and are not intended to restrict the scope of the invention. These novel embodiments could be implemented in various other modes, and various omissions, substitutions, or alterations could be effected without departing from the gist of the invention. Such embodiments or modifications are included in the scope or gist of the invention and are included in the invention as set out in the claims and equivalents thereof.

## Claims

1. A single-phase semiconductor power conversion device wherein a plurality of inverse conversion devices that convert DC power to single-phase AC power are connected in series, comprising:
n (where n is a natural number) mutually isolated inverse conversion devices INV_{U1} to INV_{Un} that output three-level voltage; and
an inverse conversion device INV_{US}, isolated from said inverse conversion devices INV_{U1} to INV_{UN}, that employs as input DC voltage a voltage V_{DCS} of one half or one third of an input DC voltage V_{DC} of said inverse conversion devices INV_{U1} to INV_{Un} and that outputs three-level voltage,
wherein said inverse conversion devices INV_{U1} to INV_{Un} and said inverse conversion device INVᵤ are series-cascade connected, and output a maximum V_{DC}×n+V_{DCS}.

2. A single-phase semiconductor power conversion device wherein a plurality of inverse conversion devices that convert DC power to single-phase AC power are connected in series, comprising:
n (where n is a natural number) mutually isolated inverse conversion devices INV_{U1} to INV_{Un} that output three-level voltage; and
1 (where 1 is a natural number of 2 or more) inverse conversion devices INV_{US}, isolated from said inverse conversion devices INV_{U1} to INV_{UN}, that employ as input DC voltage a voltage V_{DCS} of 1/k (where k is a natural number of 4 or more) of an input DC voltage V_{DC} of said inverse conversion devices INV_{U1} to INV_{Un} and that outputs three-level voltage,
wherein said inverse conversion devices INV_{U1} to INV_{Un} and said inverse conversion device INVᵤ are series-cascade connected, and output a maximum V_{DC}×n+V_{DCS}×k.

3. The semiconductor power conversion device according to claim 2,
wherein said input DC voltage V_{DCS} is made one quarter of said input DC voltage V_{DC} when the number k of said inverse conversion devices INV_{US} = 2,.

4. The semiconductor power conversion device according to claim 1, 2 or 3,
wherein said inverse conversion devices INV_{U1} to INV_{Un} output a single-pulse voltage for each cycle of the AC power and said inverse conversion device INV_{US} outputs a pulse-width modulated voltage.

5. The semiconductor power conversion device according to claim 4,
wherein an INV_{Um} of said inverse conversion devices INV_{U1} to INV_{Un} outputs voltage when a U-phase output AC voltage instruction value V_{U}* of a single-phase U phase reaches said DC voltage V_{DC}×m/2 (where m is an integer equal to n or less), and said inverse conversion device INVᵤ outputs a difference voltage of said U-phase output AC voltage instruction value V_{U}* and an output voltage of said inverse conversion devices INV_{U1} to INV_{Un} after pulse modulation.

6. A semiconductor power conversion device, further comprising:
semiconductor power conversion devices U, V, W which are mutually isolated and have a same construction as a single-phase semiconductor power conversion device according to claim 1, said AC power being three-phase UVW, so that respectively one phase each of said three-phase AC power is output by said semiconductor power conversion devices U, V, W.

7. A single-phase semiconductor power conversion device wherein a plurality of inverse conversion devices that convert DC power to single-phase AC power are connected in series, comprising:
n (where n is a natural number) mutually isolated inverse conversion devices INV_{U1} to INV_{Un} that output five-level voltage; and
an inverse conversion device INV_{US}, isolated from said inverse conversion devices INV_{U1} to INV_{UN}, that employs as input DC voltage a voltage V_{DCS} of one quarter of said input DC voltage V_{DC} of said inverse conversion devices INV_{U1} to INV_{Un} and that outputs five-level voltage,
wherein said inverse conversion devices INV_{U1} to INV_{Un} and said inverse conversion device INVᵤ are series-cascade connected, and output a maximum V_{DC}×n+V_{DCS}.

8. The semiconductor power conversion device according to claim 7,
wherein said inverse conversion devices INV_{U1} to INV_{Un} output single-pulse voltage per cycle of an AC power and said inverse conversion device INV_{US} outputs pulse-width modulated voltage.

9. The semiconductor power conversion device according to claim 8,
wherein an INV_{UM} of said inverse conversion devices INV_{U1} to INV_{Un} outputs voltage when a U-phase output AC voltage instruction value V_{U}* of a single-phase U-phase reaches said DC voltage V_{DC}×m/2 (where m is an integer equal to or less than n), and said inverse conversion device INVᵤ outputs a difference voltage of said U-phase output AC voltage instruction value V_{U}* and an output voltage of said inverse conversion devices INV_{U1} to INV_{Un} after pulse modulation.

10. The semiconductor power conversion device according to claim 9,
wherein said inverse conversion devices INV_{U1} to INV_{Un} are neutral point-clamped inverse conversion devices and a switching pattern of said inverse conversion devices INV_{U1} to INV_{Un} is determined in accordance with a direction of neutral point potential fluctuation and a direction of an output current.

11. A semiconductor power conversion device, further comprising:
semiconductor power conversion devices U, V, W which are mutually isolated and have a same construction as a single-phase semiconductor power conversion device according to claim 10, said AC power being three-phase U, V, W, so that respectively one phase each of said three-phase AC power is output by said semiconductor power conversion devices U, V, W.

12. The semiconductor power conversion device according to claims 4, 5, 10 or 11,
wherein said DC voltages V_{DC} and V_{DCS} are capacitors, and a pulse width of said inverse conversion devices INV_{U1} to INV_{Un}, and an output voltage of said inverse conversion device INV_{US} are controlled so that capacitor voltages balance.

13. The semiconductor power conversion device according to claims 4, 5, 10, 11 or 12,
wherein switching elements constituting said inverse conversion devices INV_{U1} to INV_{Un} are semiconductor devices employing silicon and said switching elements constituting said inverse conversion device INV_{US} are semiconductor devices employing silicon carbide or gallium nitride.
